# EUROPEAN PATENT APPLICATION

(11) **EP 2 879 418 A1**
(43) Date of publication of application: **03.06.2015**
(21) Application number: 14190839.2
(22) Date of filing: 29.10.2014
(51) Int. Cl.: H04W 8/18, H04W 84/22

(54) **D2D INTER CLUSTER COMMUNICATION AND CONFIGURATIONS**

(30) Priority: 27.11.2013 US 201361909777 P
(71) Applicant: Nokia Corporation, 02610 Espoo (FI)
(72) Inventor: Van Phan, Vinh, 90100 Oulu (FI); Yu, Ling, 90650 Oulu (FI); Horneman, Kari, 90800 Oulu (FI); Hugl, Klaus, 1070 Wien (AT)
(74) Representative: Nokia Corporation

(57) **Abstract**

Systems, methods, apparatuses, and computer program products for D2D cluster communication and configurations are provided. One method comprises receiving, at a first cluster head, information of a second cluster head; determining, based on the received information, a possible establishment of inter-cluster relationship with the second cluster; selecting a user equipment of at least one user equipment associated with the first cluster head, based on the received information, to relay information between the first cluster head and the second cluster head; indicating to the selected user equipment of at least one user equipment associated with the first cluster head to relay information between the first cluster head and the second cluster head; and negotiating, via the selected user equipment, an inter-cluster relationship with the second cluster head, wherein the second cluster head is associated with another user equipment for a device-to-device communication.

## Description

### TECHNICAL FIELD:

The teachings in accordance with the exemplary embodiments of this invention relate generally to device-to-device communication involving cluster heads and, more specifically, relate to establishing inter-cluster relation and communication for device-to-device communication.

### BACKGROUND:

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Certain abbreviations that may be found in the description and/or in the Figures are herewith defined as follows:
- BS: base station
- CH: cluster head
- D2D: device to device
- eNB: base station
- HARQ: hybrid automatic repeat request
- L1: layer 1 physical layer
- L2: layer 2 transport layer
- LTE: long term evolution
- LTE-A: long term evolution advanced
- MBMS: multimedia broadcast/multicast service
- ProSe: proximity services
- PS: public safety

The Third Generation Partnership Project (3GPP) group has been involved in improving technologies such as for long term evolution (LTE) and LTE-Advanced (LTE-A) networks. Continuing contributions by members of 3GPP are provided in efforts for standards acceptance to improve Proximity Services (ProSe) and device-to-device (D2D) communications. In the overall system concept and basic channel allocation scheme have been proposed. The invention introduces at least novel operations for improvement of these technologies.

### BRIEF DESCRIPTION OF THE DRAWINGS:

The foregoing and other aspects of embodiments of this invention are made more evident in the following Detailed Description, when read in conjunction with the attached Drawing Figures, wherein:
Figure 1 is a simplified block diagram of various devices suitable for use in practicing the exemplary embodiments of the invention;
Figures 2 and 3 each illustrate signaling in accordance with an exemplary embodiments of the invention; and
Figures 4A and 4B each illustrate logic flow block diagrams associated with a method and/or an operation by an apparatus in accordance with the exemplary embodiments of the invention.

### DETAILED DESCRIPTION:

The Third Generation Partnership Project (3GPP) group has been involved in improving technologies such as for long term evolution (LTE) and LTE-Advanced (LTE-A) networks. One such area of interest has been Device-to-Device (D2D) communication for LTE. D2D communication involves user equipment (UE) transmitting data signals over a direct link to each other using resources either shared or different with communication links through a base station (BS). D2D communication can help improve data rates with additional spectrum utilization. The exemplary embodiments of the invention are related to D2D communications and Proximity Services (ProSe) which have been studied in 3GPP for possible standardization.

The exemplary embodiments of the invention are related to Proximity Services (ProSe) and D2D communications. These technologies have been studied in 3GPP for possible standardization, in which ProSe one-to-many communications is one of important features for Public Safety related use cases.

ProSe one-to-many communications refers to ProSe Group Communication and ProSe Broadcast Communication. One-to-many communications may also work without prior discovery. The following assumptions can apply:
- ProSe one-to-many communications are applicable to both in and out of network coverage and are specific to Public Safety UEs;
- The source UE shall be able to transmit data to a group of UEs "with a single transmission";
   Note that this assumption does not preclude solutions where the single transmission from the source UE is relayed by another UE before reaching the recipient UEs. This assumption does not preclude the use of "multiple transmissions" solutions where the source UE uses multiple one-to-one communications to reach the recipient UEs, in scenarios where this is more efficient.
- ProSe Broadcast Communication is used for broadcast of data from a UE to all public safety UEs that are in range regardless of group membership; and/or
- Service continuity between infrastructure path and direct path may or may not be required for ProSe one-to-many communications.

In addition, prior contributions to the 3GPP body have shown that the star-topology D2D cluster, which is supervised by a central device referred to as the cluster head (CH), is a preferable option for supporting ProSe D2D communications with the following assumptions:
- Physical layer (PHY or L1) broadcasts is used for unicast and groupcast as well and the baseline is no PHY close-loop feedback (i.e. HARQ, power control etc.).
- The different higher layer services (higher layer unicast, groupcast and broadcast)are handled by broadcast on PHY layer.
- No HARQ in PHY is the baseline but possible ARQ support in layer 2 (L2).

Hence, there is seen to be at least a need for a comprehensive concept on how to facilitate robust D2D communications (unicast, groupcast and broadcast) on top of such broadcast based layer one communications.

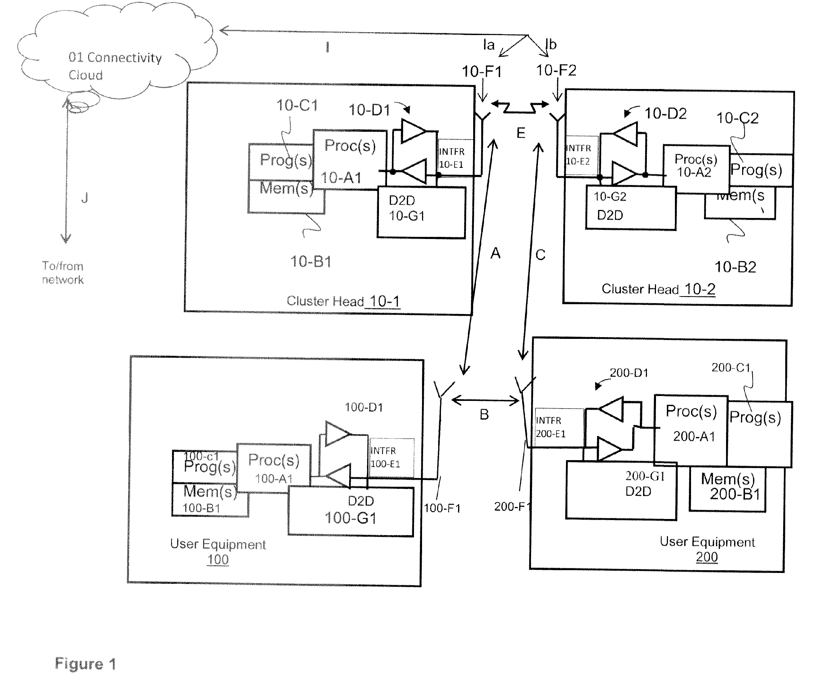

Before discussing the invention in detail reference will be made to Figure 1. Figure 1 illustrates an overview of one environment where the exemplary embodiments of the invention may be practiced. Figure 1 is a block diagram having a number of cluster heads 10. In accordance with the exemplary embodiments of the invention, communications between devices, such as the devices in Figure 1, can include direct communication, communication via another device that is connected to a network such as via connectivity cloud 01. The connectivity cloud 01 may include connectivity to a network, such as for example a cellular network, via a direct link, via a base station, via a modem, via satellite, and/or via an Internet connection. In addition, any part or all of these communications may be offloaded to a 3rd party network or device. Further, in accordance with the exemplary embodiments the novel operations as disclosed herein can be performed by devices associated with a same network or different networks.

The cluster head 10-1 includes one or more processors 10-A1, one or more memories 10-B1 containing one or more programs 10-C1, a radio frequency transceivers 10-D1 able to receive and transmit data, an interface 10-E 1, and one or more antennas 10-F1. Similarly, the cluster head 10-2 includes one or more processors 10-A2, one or more memories 10-B2 containing one or more programs 10-C2, a radio frequency transceiver 10-D2 able to receive and transmit data, an interface 10-E2, and one or more antennas 10-F2.

In addition, the cluster heads 10-1 and 10-2 can include a D2D processor (D2D) 10-G1 and 10-G2, respectively, to provide the device to device communication procedures and enable the novel operations in accordance with the exemplary embodiments of the invention. Further, as illustrated there may be a wired and/or wireless connections established between any of the cluster heads 10-1 and 10-2. Any of these connections may be used for communications of novel signaling and information exchange in accordance with the exemplary embodiments of the invention.

The User Equipment 100 (UE 100) as in Figure 1 includes one or more processors 100-A1, one or more memories 100-B1 containing one or more programs 100-C1, a radio frequency transceiver 100-D1 able to receive and transmit data, an interface 100-E1, and one or more antennas 100-F1. The interface 100-E1 is configured to operate as a wireless interface, also referred to as an air interface for communication over-the-air with other device(s), such as other user equipment. Further, the User Equipment 100 also includes a D2D processor (D2D) 100-G1. In accordance with the exemplary embodiments of the invention, the D2D processor 100-G1 is configured to at least perform the novel D2D signaling information of the invention such as to perform communications and relaying to allow the cluster heads to establish inter-cluster relationships in accordance with the exemplary embodiments of the invention. The User Equipment 100 can be any mobile equipment such as a cellular phone or other cellular device, or a device such as a PDA or gaming device.

The User Equipment 200 (UE 200) as in Figure 1 includes one or more processors 200-A1, one or more memories 200-B1 containing one or more programs 200-C1, a radio frequency transceiver 200-D1 able to receive and transmit data, an interface 200-E1, and one or more antennas 200-F1. The interface 200-E1 is configured to operate as a wireless interface, also referred to as an air interface for communication with the network and an over-the-air direct interface for communication with another user equipment. Further, the User Equipment 200 also includes a D2D processor (D2D) 200-G1. The D2D processor 200-G1 is configured to at least perform the novel D2D signaling information of the invention such as to allow the User Equipment 200 to perform communicating and relaying for establishing a service-based inter-cluster relation and communication in accordance with the exemplary embodiments of the invention.

In general, in accordance with the embodiments the various devices such as the User Equipment 100, the User Equipment 200, the Cluster Head 10-1, and/or the Cluster Head 10-2 can include, but are not limited to, cellular devices including cellular phones and smart phones, tablets having wireless communication capabilities, personal digital assistants (PDAs) having wireless communication capabilities, portable computers having wireless communication capabilities, image capture devices such as digital cameras having wireless communication capabilities, display devices and components for streaming video capabilities, gaming devices having wireless communication capabilities, music storage and playback appliances having wireless communication capabilities, Internet appliances permitting wireless Internet access and browsing, as well as portable units or terminals or wifi enabled devices that incorporate combinations of such functions.

In addition, it is noted that in accordance with the exemplary operations of the User Equipment 100 and the User Equipment 200 as described herein are non-limiting and may represent operations of one or more user equipment in a related cluster. In addition, other such user equipment as described herein may be identified a UE#m and/or UE#k. Further, the User Equipment 100 and/or the User Equipment 200 may be configured to perform communications and relaying to allow the cluster heads to establish inter-cluster relationships in accordance with the exemplary embodiments of the invention.

In accordance with the exemplary embodiments the cluster head 10-1 and/or 10-2 is configured with D2D capability and the cluster head device will coordinate the D2D communication among the devices/UEs within the cluster, such as with other cluster heads 10-1 or 10-2, and/or with the UE 100 or UE 200. Further, in accordance with the embodiments the cluster head 10-1 and/or 10-2 could include an access node/eNB of a network such as a cellular network. For this case, connectivity with the network can be via a signal line I and a signal line Ia and/or Ib to the connectivity cloud 01. The connectivity cloud 01 can provide related access node/eNB or network connectivity via a signal line J to the network. Further, as shown with arrows Ia and Ib a D2D communication may be established between the devices by the cluster heads via, at least in part, a connection with the connectivity cloud 01.

In addition, at least one of the cluster head 10-1, the cluster head 10-2, the user equipment 100, and/or the user equipment 200 is considered out-of-network-coverage. In accordance with an exemplary embodiment of the invention these out-of-network-coverage devices are enabled with an accessible cluster head, such as the cluster head 10-1 and/or 10-2, to establish a D2D connection with another device via the direct link E or, as similarly mentioned above, with a cluster head connection to the network via the signal line I and a signal line Ia and/or Ib to the connectivity cloud 01.

As shown in Fig. 1, there exist several interconnections between the network parts shown by corresponding arrows or lines. These interconnections may be established by means of interfaces or reference points which may be different in dependence of the employed network technology. It is noted that the connections and reference points as illustrated in Figure 1 are non-limiting. The connections and/or reference points may represent connections via a bus which is operable to relay the connections to any of their intended end points. In addition, the connections and components may be independent and/or combined as is desired for manufacture of the parts. Further, the components of Figure 1 may be in any location designed and configured to perform the exemplary operations of the apparatus.

In accordance with the exemplary embodiments signaling including the D2D information can be sent from the cluster head 10-1 and/or 10-2. As illustrated with signal line E there can be communication between the cluster head 10-1 and the cluster head 10-2. As illustrated with the signal lines A and C, the D2D information can be signaled to the User Equipment 100 and/or User Equipment 200. Further, a D2D communication between the user equipment 100 and the user equipment 200 may be established via any of the signal lines and/or can be established directly between the user equipment 100 and the user equipment 200 via signal line B. In addition, in accordance with the embodiments the spectrum sharing information can be part of the system code of the User Equipment 100 and User Equipment 200. Thus, exemplary D2D communication configuration can be input to the user equipment 100 and/or user equipment 200 anytime during and after manufacture of the user equipment 100 or user equipment 200. Further, signaling from the cluster head 10-1 and/or 10-2 can include command(s) to cause the user Equipment 100 or user equipment 200 to perform at least D2D discovery/synchronization, and configurations in accordance with the invention.

In addition, the use of the connectivity cloud 01 is not limited to connection to the network. In accordance with the exemplary embodiments any of at least the operations using the signals lines A, B, C, and/or E may in whole or in part be performed utilizing communications capabilities of the connectivity cloud 01.

In accordance with the exemplary embodiments of the invention, the cluster heads 10-2 and 10-2 can transmit also the exemplary D2D signaling at least in part over a dedicated channel. In addition, the D2D signaling may be broadcast. The cluster heads 10-1 and/or 10-2 can receive this D2D signaling and forward the information to the User Equipment 100 or User Equipment 200 via interface 10-E1 or 10-E2. Similarly, in accordance with the exemplary embodiments, the User Equipment 100 and/or the User Equipment 200 can receive the D2D signaling via interface 100-E1 or interface 200-E1 over the one or more antennas 100-F1 or 200-F1, respectively. The User Equipment 100 and/or the User Equipment 200 can use this information to perform operations in accordance with the exemplary embodiments to discover/establish a D2D communication between the User equipment 100 and the User Equipment 200 as shown with arrow B.

In a D2D cluster, a CH is assumed responsible for coordinating and allocating channel resources for D2D communications between cluster members including the CH itself. Thus, the concept of cluster-based D2D communication may suffer from the single-point failure and service coverage problems, meaning that:
(i) failure of CH has a inter impact on the cluster operation and D2D communication of cluster members; and
(ii) service coverage is limited within the range of CH, as those UEs which are not being able to get the resource allocation from CH will not be able to receive the communication.

These problems must be resolved when considering ProSe D2D for PS usage wherein the single-point failure problem is not acceptable for high reliability and robustness requirements and single broadcast/groupcast communication is often aimed for all users of certain PS user group(s) inside a certain service area which may be much larger than the range of CH.

In addition if we consider how a star-topology D2D cluster using broadcast based L1 may form and operate autonomously for PS usage (in out of coverage scenarios for examples). There are some basic questions as follows:
- (i) how a capable device is able to discover existing local CHs around and, based on that, decide to deploy or configure itself to operate as a new CH or to join an existing D2D cluster;
- (ii) how a capable device may communicate with a selected existing CH upon joining an existing cluster;
- (iii) how cluster members may communicate with CH or each other; and
- (iv) whether and how members of different clusters which are in D2D communication range of each other may conduct direct D2D communication.

Considering in-coverage scenarios with possible network control or assistance, the question is then how the serving eNB can help in coordinating, simplifying or optimizing D2D cluster operation. There can be many alternative solutions to the above questions but what we propose is a simple and robust solution with minimized signalling and processing overhead.

Then, considering out-of-coverage scenarios, the D2D communications and D2D clusters thereof are autonomous without control or assistance from the network side. Therefore, means for providing and enhancing possible coordination between nearby D2D clusters in, for example, synchronization and resource allocation are rather desirable and beneficial for avoiding interference or contention, thus ensuring and improving quality of D2D communications for those D2D clusters.

The embodiments of the invention address at least a problem of service coverage of the cluster based D2D communications for PS usage. For example a problem related to coverage of a single cell or cluster operation for "D2D MBMS" services towards broadcasting over a larger area not covered by a single controlling eNB or CH. The service coverage problem is resolved herein by exploring possible establishment of inter-cluster relation and communication based upon discovering the need of providing some common service over an extended service area of interest, focusing on out-of-coverage scenarios. Therefore, the provided solution enables service coverage of cluster based self-organizing autonomous D2D communications to expand as much as necessary.

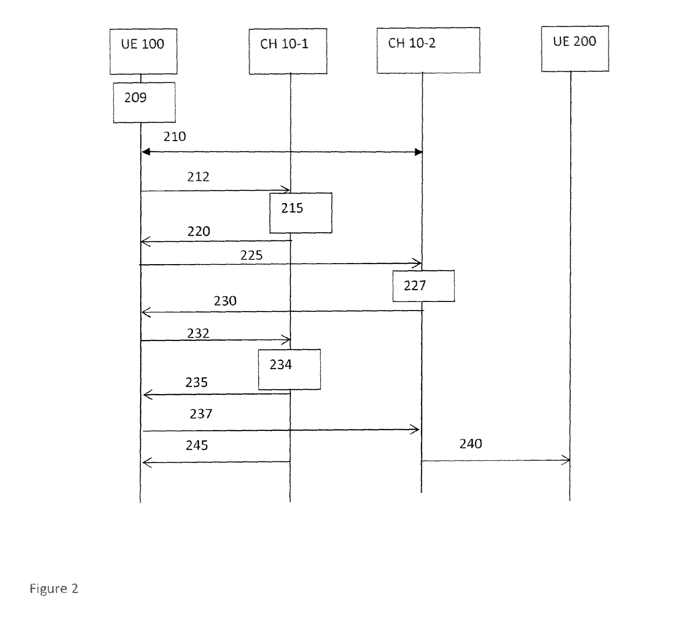

Figure 2 illustrates signaling which may be related to operations in accordance with an exemplary embodiment of the invention. As illustrated in Figure 2 at block 209 UE 100 is configured and controlled to detect and discover other cluster heads. As shown at step 210 the UE 100 receives information from the detected cluster head 10-2 and, as in step 212, reports the information to cluster head 10-1. The reported information may include, for example, detected identity and timing information of the cluster head 10-2. As shown with block 215 the cluster head 10-1 determines whether cluster head 10-2 is authentic based on the reported information and determines a need and possible establishment of inter-cluster relationship with cluster head 10-2. Then as shown in step 220 the cluster head 10-1 instructs the UE 100 to communicate with the cluster head 10-2 to request establishment of an inter-cluster relationship. The information provided by cluster head 10-1 to the UE100 may include, for example:
- cluster synchronization information such as timing information with possible timing offsets made to some preconfigured common timing references; resource allocation information such as carrier information;
- information related to occupied time-frequency-code-space resources, resource usage principles, etc.;
- D2D inter-cluster mobility and communication support information;
- existing D2D inter-cluster relationship information;
- identity, synchronization, and/or resource allocation information about other clusters with an established relationship, and so forth;
- information related to a handover of a cluster member;
- information related to inter-cluster communication via selected members of involved clusters, restriction; and/or
- information to assist a pre-configuration thereof.

At step 220 of Figure 2 the cluster head 10-1 may also provide the UE 100 with configuration information necessary to access another cluster head, which may be a cluster head other than the cluster head 10-2.

Referring back to Figure 2, as shown in step 225 the UE 100 attempts to access CH 10-2 and covey the information as provided by CH 10-1 in step 220. The CH 10-2 processes the information as shown with block 227 and sends a response to CH 10-1 via UE 100 as shown in steps 230 and 232. As a non-limiting example this response includes updated or proposed synchronization information, resource allocation information, D2D inter-cluster mobility and communication support information, and/or existing D2D inter-cluster relationship information.

Referring back to Figure 2, then as shown with block 234 the CH 10-1 determines whether or not to accept any proposed synchronization and resource allocation adjustment from CH 10-2 and responds to the CH 10-2 via the UE 100 with the determination as shown with steps 235 and 237. Based on existing D2D inter-cluster relationship information that CH 10-2 provided, CH 10-1 may also determine to detect other CH(s) which are informed by CH#2 so that CH 10-1 may eventually establish necessary relationship with other detected CH(s).

One example of a reaction by the CH 10-2 upon the received information from CH 10-1, in case CH 10-2 is a stand-alone CH or has just a few and/or not so active members, is that the CH 10-2 may adjust synchronization and resource allocation of itself and its cluster to fit for or be synchronized to that of CH 10-1. For another example, CH 10-2 may determine not to make adjustment on its own cluster, but instead propose a possible adjustment related to synchronization and resource allocation of CH 10-1. As another example, CH 10-2 may determine to detect or have other CH(s), as informed by CH 10-1, be detected such that CH 10-2 may eventually establish necessary relationship with other detected CH(s). Based on these examples, further examples can be provided regarding issues of inter-cluster resource allocation, mobility and communication support, etc.

Referring back to Figure 2, based on existing D2D inter-cluster relationship information that CH 10-2 provided, CH 10-1 may also determine to detect other CH(s) which are informed by CH10-2 so that CH 10-1 may eventually establish necessary relationship with other detected CH(s). Then as shown with steps 245 and 240 the CH 10-1 and CH 10-2, after initial D2D inter-cluster relationship having been established, informs the cluster members, in this case UE 100 and UE 200, about the established inter-cluster relationship with necessary inter-cluster information. This information can include timing offset(s) and/or resource allocation for D2D discovery. In addition, the CHs may keep each other updated of any new information via some selected suitable member, such as UE 100, time-to-time.

For autonomous D2D communications, the above proposals are realized based on hard-coded pre-configurations and self-organizing capability of D2D devices. For network-controlled D2D communications, many elements may be realized using possible assistance services from the network (serving eNB). The serving eNB may be considered as a coordination point or master of all CHs operating inside the cell. In this regard, the serving eNB may be able to take over or provide assistance in any functions of CH towards members using cellular access (common or dedicated control). Thus, the problem of CH changes may be resolved by the serving eNB quite easily.

In accordance with the exemplary embodiments the UE 100 may detect CH 10-2 based on received signal(s) and broadcast information directly from CH 10-2 or some member UE#m thereof. It is noted that CH 10-2 here may also represent or include Cluster#2. The former case is considered above in regards to Figure 2. In the latter case, depending on detailed level of received signal(s) and information, UE 100 may not just detect but discover UE#m and CH 10-2 to some extent. If UE 100 and UE#m are able to communicate with each other then an option including that CH 10-1 and CH 10-2 decide to establish D2D inter-cluster relationship via a D2D connection between user equipment, such as UE 100 and UE#m, may be considered as well. Then, D2D connection between such UE 100 and UE#m may be utilized for possible inter-cluster communication. But for simplicity reason, CH 10-1 may just regard CH 10-2 as a non-interfering cluster and therefore not initiate D2D inter-cluster relationship with CH 10-2.

Since it is desirable to have tight synchronization for D2D operation over the entire of D2D service area even in out-of-coverage scenarios, not just CH but some member(s) thereof may be configured to send (expand) D2D synchronization signal(s). For instance, CH 10-1 may select and configure UE 100 to send synchronization signal(s) specific to CH 10-1 (in this case CH 10-1 here also represents Cluster#1 as clarified above). That is, UE 100 may send common synchronization signal(s), same as that of CH 10-1 or derived from that of CH 10-1 in a synchronized manner. In case that CH 10-2 is a stand-alone CH and detects the synchronization signals from some member e.g., UE 100 of CH 10-1 then CH 10-2 may decide to adjust its timing to synchronize to CH 10-1. Furthermore, if a new coming CH 10-2 has just a few UE members and some UE#m of CH 10-2 detects synchronization signal(s) of CH 10-1 and reports that to CH 10-2 then CH 10-2 may also decide to adjust its timing to synchronize to CH 10-1 without a need of establishing a full D2D inter-cluster relationship.

The exchanged timing offset as mentioned above may also take into account the timing advance of the conveying UE 100 if that is significant enough. In an alternative option, the timing advance information of UE 100 towards CH 10-1 and CH 10-2 may be exchanged between CH 10-1 and CH 10-2 explicitly so that any resulted timing adjustment of either CH 10-1 or CH 10-2 may take that into account.

For an example of D2D inter-cluster mobility support, CH 10-1 may decide and ask UE 100 to join CH 10-2, provided that CH 10-2 agrees to support such handover from CH 10-1 via the established inter-cluster relationship.

It is noted that inter-cluster communications for broadcast/groupcast services are not new. These communications are known for example from Bluetooth piconet network, ad hoc networks or wireless sensor networks communications etc.. In many cases is just assumed there is an inter-cluster relationship between neighboring clusters exist with little or no consideration of most essential or practical issues of how such the relationship can be established to begin with.

In the scenario as shown with Figure 2, the establishment of inter-cluster relationship was driven by the need or benefit of coordinating physical and/or radio access attributes between local clusters such as for extending radio synchronization and/or coordinating allocation and utilization of spectrum resources among relevant local clusters. The service coverage problem was not addressed.

In an exemplary embodiment of the invention, there is upon establishing physical D2D inter-cluster relationship in a scenario as discussed above at least with regards to Figure 2, a common service based inter-cluster relation and communication including: discovering common service(s), establishing service based relation and communication with a smart share of responsibility to facilitate common service(s) such as single broadcast/groupcast services. This can involve at least the following new signaling elements or procedures:
- Exchanging all possible single broadcast/groupcast services related discovery contexts of individual clusters involved: including at least all relevant broadcast/groupcast service IDs, related application IDs, and/or user group IDs of individual clusters as well as their neighboring clusters which have inter-cluster relationship established with the individual clusters in question
- Indicating or notifying each other of identified common service(s): this kind of operation may be optional concerning two or more immediate neighboring clusters but in some cases a cluster may discover and notify a neighboring cluster about having some common single broadcast/groupcast service with some of its neighbors which are not neighbors of the notifying cluster (i.e., this kind of operation most concerns non-immediate clusters which have at least one common immediate neighboring cluster
- Negotiating and coordinating for providing the selected common service(s) across the involved clusters, including e.g.:
   o Selecting and agreeing on selected common service(s) to be provided across the involved clusters and how to provide those services: here at least some request/response or indication/confirmation signaling procedure between involved clusters (e.g. from an initiating CH to a targeted CH directly or relayed via at least one selected cluster member) on the selected common service(s) is implied. Detailed configuration information how to provide (e.g., transmit/receive) those services across relevant clusters are exchanged.
   o Selecting and configuring suitable individual member(s) of involved clusters to provide efficient inter-cluster communication including e.g. possible direct inter-cluster transmission/reception (for instance a selected user may be the one who is reconfigured to transmit with higher power for other cluster as well or the one who is reconfigured to directly receive from other cluster) or relaying services (for instance a selected user may act as a common member of at least 2 involved clusters and relaying received data of one cluster to another between the involved clusters)
   o Selecting and reorganizing some parts (which may consist of more than one relevant members together) of involved clusters to provide efficient inter-cluster communication including e.g. relaying services (for instance forming a new intermediate relaying cluster from members of involved clusters of which each member is acting as an intermediate relaying node or for instance having some selected member to act as member of one cluster and CH of another for self-organized service-based inter-cluster communication of interest.

Note that if discovering common service(s) were possible prior to establishing physical D2D inter-cluster relationship as discussed above then discovered common service(s) might be used as a driver for establishing such the physical D2D inter-cluster relationship and communication. In this case, distributed decision may be applied in which the reporting UE may determine and report on common services of discovered clusters.

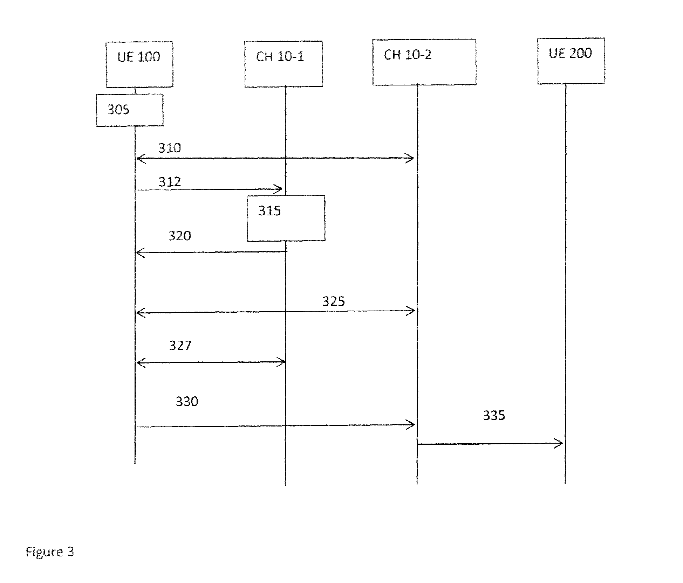

The analogy of establishing D2D inter-cluster relationship is disclosed as stated above at least with regards to Figure 2. Based on that, Figure 3 illustrates how the exemplary embodiments of the invention can be implemented, considering two neighboring clusters with a common single broadcast/groupcast service. As illustrated in Figure 3:
1. The UE100, as member of a D2D cluster including CH 10-1, listens for signaling from another cluster as shown with block 305. In Figure 3 as shown with step 310 the UE 100 receives a message from the CH 10-2. The CH 10-2 message includes for example information regarding a CH ID and/or Cluster ID. Then as shown with step 312 the UE 100 sends the information to the CH 10-1.
2. The CH 10-1, based on the information received from UE 100, then selects which UE(s) would be the relay to exchange CH information between the cluster heads as shown in block 315. In accordance with the exemplary embodiments only a single UE may need to be selected to relay the information. Further, although Figure 3 may show the selected device as the UE 100, this is non-limiting and the exemplary operations can include a different device is selected. It is noted that this relaying is assuming reciprocal channel conditions of the UE and/or the CH. In case the report from UE includes some "channel quality" indication, the UE having the best channel conditions might be selected. In this non-limiting scenario the selected UE includes the UE 100.
3. Then as shown with step 320 the CH 10-1 informs the selected UE 100 to relay the information for exchanging and negotiating a service based inter-cluster relation and communication with the other CH 10-2, as described above. As shown in steps 325 and 327 of Figure 3 the CH 10-2 and the CH 10-1 communicate with each other via the UE 100 to at least exchange and negotiate a service based inter-cluster relation, as described above. The cluster heads agree on providing an identified common broadcast/groupcast service, specified with certain preconfigured Service ID and/or Group ID, across the two clusters. The relay UE(s) may also be reselected and configured with necessary resource allocation of the involved clusters so as to relay for the common broadcast/groupcast service of interest. This communication for agreement can be specified with certain preconfigured Service ID and/or Group ID across the two clusters. The relay UE, in this case the UE 100, may also be reselected and configured with necessary resource allocation of the involved clusters so as to relay for the common broadcast/groupcast service of interest.
4. Then as shown in step 330 the relay UE 100 transmits the data related to the identified common broadcast/groupcast service to the neighboring cluster CH 10-2 using for example preconfigured resource allocation and/or scheduling information of the CH 10-1 and/or CH 10-2. Then CH 10-2 transmits, as shown in step 335, the data related to the identified common broadcast/groupcast service to the relevant UEs (e.g., UE 200) within its own D2D cluster.

The exemplary embodiments of the invention at least allow for coordinating and/or expanding D2D synchronization and resource allocation across multiple D2D clusters which improves resource utilization for D2D communication especially in out-of-coverage scenarios or autonomous D2D communications. In addition, the exemplary embodiment of the invention enables service coverage of cluster based D2D communications to expand as much as necessary.

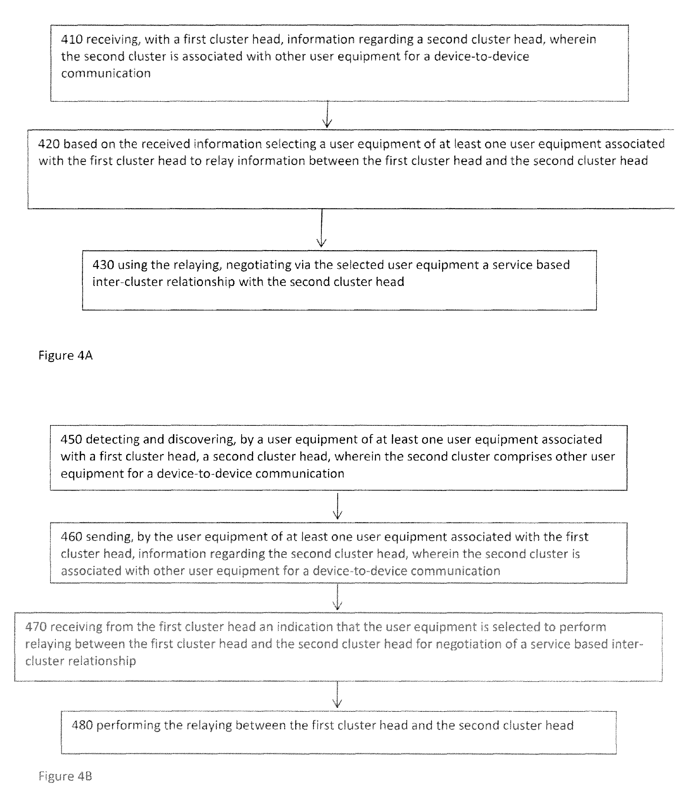

Figures 4A and 4B each illustrate logic flow block diagrams associated with a method and/or an operation by an apparatus in accordance with the exemplary embodiments of the invention.

As illustrated in step 410 of Figure 4A there is receiving, with a first cluster head, information regarding a second cluster head, wherein the second cluster is associated with other user equipment for a device-to-device communication. As illustrated in step 420 there is, based on the received information selecting a user equipment of at least one user equipment associated with the first cluster head to relay information between the first cluster head and the second cluster head. Then as shown in step 430 there is using the relaying, negotiating via the selected user equipment a service based inter-cluster relationship with the second cluster head.

In accordance with the exemplary embodiments of the invention as described in the paragraph above, the information is received from each of the at least one user equipment.

In accordance with the exemplary embodiments of the invention as described in the paragraphs above, wherein the information comprises broadcast and/or groupcast services related discovery contexts of individual clusters involved, including at least all relevant broadcast/groupcast service IDs, related application IDs, and/or user group IDs of individual clusters as well as their neigh boring clusters which have inter-cluster relationship established.

In accordance with the exemplary embodiments of the invention as described in the paragraphs above, the information from each of the at least one user equipment comprises channel quality information with the second cluster head.

In accordance with the exemplary embodiments of the invention as described in the paragraphs above, the selecting comprises selecting a user equipment of the at least one user equipment with a best channel quality information condition.

In accordance with the exemplary embodiments of the invention as described in the paragraphs above, the information comprises at least one of a cluster head identification, and a cluster identification associated with the second cluster head.

In accordance with the exemplary embodiments of the invention as described in the paragraphs above, the negotiating comprises negotiating at least one of timing information, resource allocation information, inter-cluster relationship support information, and configuration information necessary to access the second cluster access head.

In accordance with the exemplary embodiments of the invention as described in the paragraphs above, the timing information comprises timing offsets of preconfigured timing references common to the device-to-device communication.

In accordance with the exemplary embodiments of the invention as described in the paragraphs above, the timing information is sent to the selected user equipment for use in establishing the device-to-device communication.

As illustrated in step 450 of Figure 4B there is detecting and discovering, by a user equipment of at least one user equipment associated with a first cluster head, a second cluster head, wherein the second cluster comprises other user equipment for a device-to-device communication. As illustrated in step 460 of Figure 4B there is sending, by the user equipment of at least one user equipment associated with the first cluster head, information regarding the second cluster head, wherein the second cluster is associated with other user equipment for a device-to-device communication. As illustrated in step 470 there is, receiving from the first cluster head an indication that the user equipment is selected to perform relaying between the first cluster head and the second cluster head for negotiation of a service based inter-cluster relationship. Then as shown in step 480 there is performing the relaying between the first and second cluster head.

In accordance with the exemplary embodiments of the invention as described in the paragraph above, the information regarding the second cluster head comprises channel quality information.

In accordance with the exemplary embodiments of the invention as described in the paragraphs above, the selecting is based on the channel quality information being better than channel quality information of other user equipment of the at least one user equipment.

In accordance with the exemplary embodiments of the invention as described in the paragraphs above, the information regarding the second cluster head comprises at least one of cluster head identification, and cluster identification associated with the second cluster head.

In accordance with the exemplary embodiments of the invention as described in the paragraphs above, wherein the information comprises broadcast and/or groupcast services related discovery contexts of individual clusters involved, including at least all relevant broadcast/groupcast service IDs, related application IDs, and/or user group IDs of individual clusters as well as their neighboring clusters which have inter-cluster relationship established.

In accordance with the exemplary embodiments of the invention as described in the paragraphs above, the negotiation of a service based inter-cluster relationship comprises at least one of negotiated timing information, resource allocation information, inter-cluster relationship support information, and configuration information necessary to access the second cluster access head.

In accordance with the exemplary embodiments of the invention as described in the paragraphs above, the timing information comprises timing offsets of preconfigured timing references common to the device-to-device communication.

In accordance with the exemplary embodiments of the invention as described in the paragraphs above, there is receiving information comprising the timing information from the first cluster head; and using the received timing information, establishing the device-to-device communication with a user equipment associated with the second cluster head.

In accordance with the exemplary embodiments of the invention there is an apparatus comprising: at least one processor; and at least one memory including computer program code, where the at least one memory and the computer program code are configured, with the at least one processor, which can cause the apparatus to perform the embodiments of the invention as at least described in the paragraphs above.

In accordance with the exemplary embodiments as discussed above, a computer readable medium storing a program of instructions, execution of which by a processor configures an apparatus to at least receive, with a first cluster head, information regarding a second cluster head, wherein the second cluster is associated with other user equipment for a device-to-device communication; based on the received information for select a user equipment of at least one user equipment associated with the first cluster head to relay information between the first cluster head and the second cluster head; using the relaying, to negotiate via the selected user equipment a service based inter-cluster relationship with the second cluster head.

In accordance with the exemplary embodiments as discussed above, a computer readable medium storing a program of instructions, execution of which by a processor configures an apparatus to at least detect and discover, with a user equipment of at least one user equipment associated with a first cluster head, a second cluster head, wherein the second cluster comprises other user equipment for a device-to-device communication; send, with the user equipment of at least one user equipment associated with the first cluster head, information regarding the second cluster head, wherein the second cluster is associated with other user equipment for a device-to-device communication; receive from the first cluster head an indication that the user equipment is selected to perform relaying between the first cluster head and the second cluster head for negotiation of a service based inter-cluster relationship; and perform the relaying between the first and second cluster head.

Further, in accordance with the exemplary embodiments there is an apparatus which is configured with means for performing the embodiments of the invention as at least described in the paragraphs above.

In accordance with the exemplary embodiments there is an apparatus comprising means for receiving, with a first cluster head, information regarding a second cluster head, wherein the second cluster is associated with other user equipment for a device-to-device communication. There is means, based on the received information for selecting a user equipment of at least one user equipment associated with the first cluster head to relay information between the first cluster head and the second cluster head. Then there is means for using the relaying, negotiating via the selected user equipment a service based inter-cluster relationship with the second cluster head.

In accordance with the exemplary embodiments of the invention as described in the paragraph above the means for receiving comprises an interface connected to at least one antenna, wherein the interface processes signals received at the antenna and forwards via circuitry, such as radio frequency transceiver circuitry, at least in part the signals to at least one processor which is associated with at least one memory including computer program code executable by the at least one processor to perform operations related to further processing the signal in accordance with the embodiments described herein. Wherein the means for selecting is performed using at least one memory including computer program code executable by the at least one processor, and is based on examining the signaling received via the interface. The selecting means may include selecting based on signal qualities associated with signal strength, noise levels, a direction, and/or spatial properties of the received signals, just to name a few. Wherein the means for relaying is using the interface for processing signals destined for the antenna for transmission by the antenna such that they are sent to the device selected to relay to at the apparatus. The signal destined for transmission by the antenna is provided radio devices of the apparatus including the at least one processor associated with the at least one memory including computer program code executed by the at least one processor. The means for negotiating comprises the at least one memory including the computer program code executable by the at least one processor, and is based on signaling received from another device via the interface as described above.

In accordance with the exemplary embodiments there is an apparatus comprising means for detecting and discovering, by a user equipment of at least one user equipment associated with a first cluster head, a second cluster head, wherein the second cluster comprises other user equipment for a device-to-device communication. In accordance with the exemplary embodiments the apparatus comprises means for sending with a user equipment information regarding the second cluster head, wherein the second cluster is associated with other user equipment for a device-to-device communication. In accordance with the exemplary embodiments the apparatus comprises means for receiving from the first cluster head an indication that the user equipment is selected to perform relay between the first cluster head and the second cluster head for negotiation of a service based inter-cluster relationship. In accordance with the exemplary embodiments there is means for performing the relaying between the first and second cluster head as described above.

In accordance with the exemplary embodiments of the invention as described in the paragraph above the means detecting, discovering, sending and receiving (e.g., relaying) comprises an interface connected to at least one antenna, wherein the interface processes signals received at the antenna and forwards via circuitry, such as radio frequency transceiver circuitry, at least in part the signals to at least one processor which is associated with at least one memory including computer program code executable by the at least one processor to perform operations on at least the signaling related to discovery, detecting and further processing the signal in accordance with the embodiments described herein. Wherein the interface process signals received from a processor which is executing computer program code stored on a memory to perform the signal generation for the sending and receiving. The signaling destined for the antenna via the interface for transmission by the antenna to a device identified for the sending at the apparatus.

In general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of exemplary and non-limiting examples a full and informative description of the best method and apparatus presently contemplated by the inventors for carrying out the invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several non-limiting and non-exhaustive examples.

Furthermore, some of the features of the preferred embodiments of this invention could be used to advantage without the corresponding use of other features. As such, the foregoing description should be considered as merely illustrative of the principles of the invention, and not in limitation thereof.

## Claims

1. A method, comprising:
receiving, at a first cluster head, information of a second cluster head;
determining, based on the received information, a possible establishment of inter-cluster relationship with the second cluster;
selecting a user equipment of at least one user equipment associated with the first cluster head, based on the received information, to relay information between the first cluster head and the second cluster head;
indicating to the selected user equipment of at least one user equipment associated with the first cluster head to relay information between the first cluster head and the second cluster head; and
negotiating, via the selected user equipment, an inter-cluster relationship with the second cluster head,
wherein the second cluster head is associated with another user equipment for a device-to-device communication.

2. The method as in claim 1, wherein the information is from at least one of the at least one user equipment associated with the first cluster head.

3. The method as in claim 1 or claim 2, wherein the information comprises at least one of broadcast or groupcast service related discovery contexts of individual clusters involved, channel quality information of the second cluster head, a cluster head identification or a cluster identification associated with the second cluster head.

4. The method as in any one of claims 1 through 3, wherein the selecting is based on the channel quality being better than channel quality of other user equipment of the at least one user equipment.

5. The method as in any one of claims 1 through 4, wherein the negotiating comprises negotiating at least one of timing information, resource allocation information, inter-cluster relationship support information, or configuration information to access the second cluster head.

6. The method as in claim 5, wherein the timing information is sent to the selected user equipment for use in establishing the device-to-device communication.

7. The method as in claim 5 or claim 6, wherein the timing information comprises timing offsets of preconfigured timing references common to the device-to-device communication.

8. A method, comprising:
detecting, at a user equipment of at least one user equipment associated with a first cluster head, a second cluster head, wherein the second cluster head is associated with another user equipment for a device-to-device communication;
sending information of the second cluster head to the first cluster head;
receiving an indication to relay between the first cluster head and the second cluster head for negotiation of an inter-cluster relationship;
performing the relaying between the first cluster head and the second cluster head.

9. The method as in claim 8, wherein the information comprises at least one of broadcast or groupcast service related discovery contexts of individual clusters involved, channel quality information of the second cluster head, cluster head identification or cluster identification associated with the second cluster head.

10. The method as in claim 8 or claim 9, wherein the negotiation of an inter-cluster relationship comprises at least one of negotiated timing information, resource allocation information, inter-cluster relationship support information, or configuration information necessary to access the second cluster access head.

11. The method as in any one of claims 8 through 10, further comprising: transmitting data related to an identified common broadcast or groupcast service to the second cluster.

12. The method, comprising:
receiving, at a user equipment, an indication that the user equipment is selected to relay between a first cluster head and a second cluster head for negotiation of an inter-cluster relationship; and
performing the relaying between the first cluster head and the second cluster head,
wherein the indication is received from the first cluster head and the second cluster head is associated with another user equipment for a device-to-device communication.

13. The method of 12 further comprising: transmiting data related to an identified common broadcast or groupcast service to the second cluster.

14. The method of claim 12 or claim 13, wherein the negotiation of an inter-cluster relationship comprises at least one of negotiated timing information, resource allocation information, inter-cluster relationship support information, or configuration information necessary to access the second cluster access head.

15. An apparatus comprising means to perform a method according to any one of claims 1 through 7, or according to any one of claims 8 through 11, or according to any one of claims 12 through 14.
